# FASCICULE DE BREVET EUROPEEN

(11) **EP 3 535 507 B1**
(45) Date de publication et mention de la délivrance du brevet: **25.11.2020**
(21) Numéro de dépôt: 17793709.1
(22) Date de dépôt: 12.10.2017
(51) Int. Cl.: F16H 61/12, F16H 61/28, F16H 61/688

(54) **PROCÉDÉ ET DISPOSITIF DE DÉTERMINATION DE NOUVELLES POSITIONS D'ACTIONNEURS D'UNE BOÎTE DE VITESSES DCT D'UN VÉHICULE**
VERFAHREN UND VORRICHTUNG ZUR BESTIMMUNG NEUER AKTUATORPOSITIONEN EINES DCT-GETRIEBES EINES FAHRZEUGS
METHOD AND DEVICE FOR DETERMINING NEW ACTUATOR POSITIONS OF A DCT GEARBOX OF A VEHICLE

(30) Priorité: 04.11.2016 FR 1660680
(43) Date de publication de la demande: 11.09.2019
(73) Titulaire: PSA Automobiles SA, 78300 Poissy (FR)
(72) Inventeur: SCHAEFFER, Eric, 75013 Paris (FR)
(86) Numéro de dépôt international: PCT/FR2017/052818
(87) Numéro de publication internationale: WO 2018/083392

(56) Documents cités:
- FR-A1- 2 979 405
- FR-A1- 3 018 888
- US-B1- 9 404 572

## Description

L'invention concerne les véhicules comprenant une boîte de vitesses à double embrayage (ou DCT), et plus précisément la détermination de nouvelles positions d'actionneurs d'une telle boîte de vitesses pendant la durée de vie du véhicule, tel que connue de la publication FR 3 018 888 A1.

Une boîte de vitesses DCT comprend deux parties (parfois appelées « demies-boîtes de vitesses ») dédiées respectivement aux rapports pairs et aux rapports impairs. Chaque partie de cette boîte de vitesses comprend un arbre primaire couplé à son propre embrayage et destiné à être couplé à au moins un arbre secondaire, et au moins un actionneur propre à agir sur un synchroniseur associé pour synchroniser la vitesse d'un pignon fou avec celle de son arbre récepteur dans une phase de synchronisation, et pour coupler ce pignon fou à son arbre récepteur dans une phase de crabotage.

Ce type d'agencement permet d'engager simultanément les deux arbres primaires sur des rapports différents, afin de permettre des changements de rapport très rapides et sous couple, c'est-à-dire sans interruption de l'accélération du véhicule.

Chaque changement de rapport s'effectue en deux étapes. Dans une première étape, lorsqu'un rapport pair ou impair est engagé dans la boîte de vitesses, le calculateur contrôlant cette dernière anticipe l'engagement du rapport suivant en présélectionnant un rapport impair ou pair. C'est ce que l'on appelle le « passage de la présélection ». Dans une seconde étape, lorsque certaines conditions sont réunies, le calculateur contrôle l'engagement du rapport suivant en provoquant la fermeture de l'embrayage qui est associé au rapport présélectionné et en ouvrant l'autre embrayage associé au rapport en cours d'engagement.

La présélection d'un rapport est réalisée par un actionneur et un synchroniseur qui lui sont associés lors de phases de synchronisation et de crabotage d'un pignon fou. Lors de chacune de ces phases, cet actionneur se déplace dans des positions précises dans lesquelles il agit via une fourchette sur le synchroniseur associé. Le placement dans ces positions précises est rendu possible par la présence d'un capteur de position associé à l'actionneur et chargé de mesurer à chaque instant sa position en cours par rapport à une position de référence.

Dans la phase de synchronisation, l'actionneur concerné prend une première position à la fin d'une sous-phase de pilotage en position et une deuxième position à la fin d'une sous-phase de pilotage en effort. Dans la phase de crabotage l'actionneur concerné prend une troisième position.

Ces positions précises de chaque actionneur, lors de chaque phase de synchronisation et de chaque phase de crabotage associée, sont apprises lors d'une phase d'apprentissage en usine. Plus précisément, on construit une table de correspondance qui établit une correspondance entre des positions prises par chaque actionneur d'une partie de la boîte de vitesses pendant une présélection et des couples moteur qui sont transmis à l'autre partie de cette boîte de vitesses pendant cette présélection. Cette table de correspondance comprend donc les différentes positions prises par chaque actionneur en présence de différents couples moteur, et cela pour la phase de synchronisation et la phase de crabotage d'une présélection de rapport.

Grâce à cette table de correspondance lors d'une présélection d'un rapport l'actionneur associé à ce dernier peut être positionné précisément tant dans la phase de synchronisation que dans la phase de crabotage, compte tenu du couple qui est transmis à la partie de la boîte de vitesses qui n'est pas celle à laquelle il appartient, de sorte que cette présélection n'induise pas de bruit, de choc ou de craquement qui pourrait perturber le conducteur.

Les différents actionneurs, fourchettes et synchroniseurs d'une boîte de vitesses DCT étant des pièces (ou ensemble de pièces) mobiles mécaniques, ils font l'objet d'une usure et/ou d'une fatigue qui se tradui(sen)t progressivement par des positionnements non optimaux des synchroniseurs et donc par des dysfonctionnements, voire des blocages, de la boîte de vitesses.

Actuellement, en présence d'un tel dysfonctionnement le véhicule doit être apporté le plus vite possible dans un service après-vente (tel qu'un garage), afin que de nouvelles positions des actionneurs soient déterminées en vue de remplacer les anciennes dans la table de correspondance qui est stockée dans le véhicule, éventuellement après le remplacement de certaines pièces de la boîte de vitesses. On comprendra que ce type de situation rend le véhicule inutilisable pendant un certain temps et fait perdre du temps à son conducteur.

L'invention a donc notamment pour but d'améliorer la situation.

Elle propose notamment à cet effet un procédé destiné à permettre la détermination de nouvelles positions d'actionneurs dans une boîte de vitesses à double embrayage d'un véhicule produisant un couple moteur variable, cette boîte de vitesses comprenant deux parties comportant chacune au moins un actionneur propre à agir sur un synchroniseur associé lorsqu'il est placé, lors de phases de synchronisation et de crabotage d'un pignon fou, dans des positions connues stockées dans une table en correspondance de couples moteur connus et transmis à l'autre partie de la boîte de vitesses.

Ce procédé de détermination se caractérise par le fait qu'il comprend une étape dans laquelle, en cas de détection d'un problème résultant d'un déplacement d'un actionneur d'une partie de la boîte de vitesses :
- on détermine dans la table de correspondance la position connue de cet actionneur qui est associée à un couple moteur connu qui correspond au couple moteur transmis à l'autre partie de la boîte de vitesses lors de ce problème détecté, puis
- on détermine un écart entre cette position connue déterminée et une position de cet actionneur mesurée lors de ce problème détecté, et
- on remplace dans la table de correspondance cette position connue déterminée par une nouvelle position fonction de cet écart déterminé.

Ainsi, pendant la durée de vie du véhicule il est désormais possible de déterminer, automatiquement et donc sans intervention du conducteur ou d'un technicien d'un service après-vente, de nouvelles positions des actionneurs de sa boîte de vitesses de type DCT afin de mettre à jour (ou corriger) sa table de correspondance (positions/couples).

Le procédé de détermination selon l'invention peut comporter d'autres caractéristiques qui peuvent être prises séparément ou en combinaison, et notamment :
- dans son étape, la nouvelle position peut être égale à la somme de la position connue déterminée et de l'écart déterminé ;
- dans son étape, on peut remplacer progressivement dans la table de correspondance la position connue déterminée par la nouvelle position en N2 fois, avec N2 ≥ 2, une première fois étant consécutive à la détermination de la nouvelle position et chaque fois suivante étant consécutive à un nouveau déplacement de l'actionneur, similaire au précédent déplacement, en présence d'un couple moteur transmis à l'autre partie de la boîte de vitesses et correspondant au couple moteur connu associé à la position connue déterminée ;
   > dans son étape, on peut déterminer N2 en fonction de l'écart déterminé ;
- dans son étape, on peut déterminer l'écart lorsqu'une différence entre le couple moteur connu, associé à la position connue déterminée, et le couple moteur, transmis à l'autre partie de la boîte de vitesses lors du problème détecté, est inférieure à un premier seuil prédéfini ;
- dans son étape, on peut effectuer le remplacement lorsque l'écart est supérieur à un second seuil prédéfini ;
- on peut effectuer son étape en cas de détection du problème un nombre de fois égal à une valeur prédéfinie.

L'invention propose également un dispositif dédié à la détermination de nouvelles positions d'actionneurs dans une boîte de vitesses à double embrayage d'un véhicule produisant un couple moteur variable, cette boîte de vitesses comprenant deux parties comportant chacune au moins un actionneur propre à agir sur un synchroniseur associé lorsqu'il est placé, lors de phases de synchronisation et de crabotage d'un pignon fou, dans des positions connues stockées dans une table en correspondance de couples moteur connus et transmis à l'autre partie de la boîte de vitesses.

Ce dispositif de détermination se caractérise par le fait qu'il comprend des moyens de traitement propres, en cas de détection d'un problème résultant d'un déplacement d'un actionneur d'une partie de la boîte de vitesses :
- à déterminer dans la table de correspondance la position connue de cet actionneur qui est associée à un couple moteur connu qui correspond au couple moteur transmis à l'autre partie de la boîte de vitesse lors de ce problème détecté, puis
- à déterminer un écart entre cette position connue déterminée et une position de cet actionneur mesurée lors de ce problème détecté, et
- à remplacer dans la table de correspondance la position connue déterminée par une nouvelle position fonction de cet écart déterminé.

L'invention propose également un calculateur comprenant un dispositif de détermination du type de celui décrit ci-avant.

L'invention propose également un véhicule, éventuellement de type automobile, et comprenant une boîte de vitesses à double embrayage et un dispositif de détermination du type de celui présenté ci-avant ou un calculateur du type de celui présenté ci-avant.

D'autres caractéristiques et avantages de l'invention apparaîtront à l'examen de la description détaillée ci-après, et des dessins annexés, sur lesquels :
- la figure 1 illustre schématiquement et fonctionnellement un exemple de boîte de vitesses de type DCT couplé à un calculateur équipé d'un dispositif de détermination selon l'invention, et
- la figure 2 illustre schématiquement un exemple d'algorithme mettant en oeuvre un procédé de détermination selon l'invention.

L'invention a notamment pour but de proposer un procédé, et un dispositif DD associé, destinés à permettre la détermination de nouvelles positions prises par des actionneurs ACj d'une boîte de vitesses BV de type DCT destinée à équiper un véhicule, pendant des phases de synchronisation et de crabotage survenant lors d'une présélection de rapport.

On considère dans ce qui suit, à titre d'exemple non limitatif, que le véhicule est de type automobile. Il s'agit par exemple d'une voiture. Mais l'invention n'est pas limitée à ce type de véhicule. Elle concerne en effet tout véhicule comprenant une boîte de vitesses de type DCT. Par conséquent, l'invention concerne notamment les véhicules terrestres (voitures, motocyclettes, véhicules utilitaires, cars (ou bus), camions, engins de voirie, engins de chantier, engins de manutention, et trains), et les véhicules maritimes (ou fluviaux).

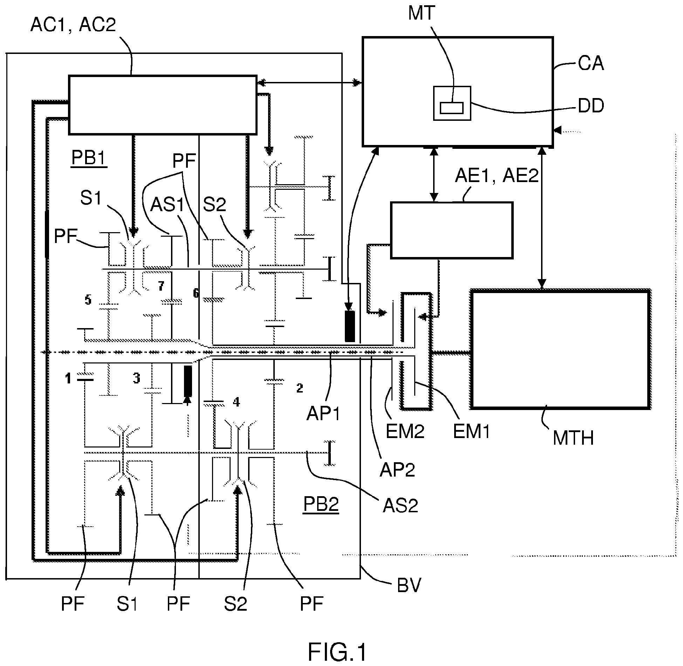

On a schématiquement représenté sur la figure 1 un exemple de boîte de vitesses BV de type DCT, couplé à un dispositif de détermination DD selon l'invention et à un moteur thermique MTH via un double embrayage EM1, EM2, au sein d'un véhicule (non représenté).

Ce moteur thermique MTH est chargé de fournir un couple moteur variable pour déplacer le véhicule.

La boîte de vitesses BV étant à double embrayage (ou DCT), elle est subdivisée en deux parties (ou demies-boîtes) PBj (j = 1 ou 2) comprenant chacune un arbre primaire APj couplé à son propre embrayage EMj et destiné à être couplé à au moins un arbre secondaire ASk, et au moins un actionneur ACj propre à agir sur un synchroniseur Sj associé pour synchroniser la vitesse d'un pignon fou PF avec celle de son arbre récepteur dans une phase de synchronisation, et pour coupler ce pignon fou PF à son arbre récepteur dans une phase de crabotage.

On notera que dans l'exemple illustré non limitativement sur la figure 1, la boîte de vitesses BV comprend deux arbres secondaires ASk (k = 1 ou 2) qui font chacun partie des deux parties PBj et donc qui portent chacun au moins un synchroniseur S1 de la première partie PB1 et au moins un synchroniseur S2 de la seconde partie PB2. Chaque synchroniseur Sj est donc ici associé à un arbre secondaire ASk pour synchroniser la vitesse d'un pignon fou PF de ce dernier (ASk (qui constitue son arbre récepteur) avec celle de cet arbre secondaire ASk dans une phase de synchronisation, et pour coupler ce pignon fou PF à son arbre secondaire (récepteur) ASk dans une phase de crabotage. Mais d'autres agencements sont possibles, dès lors que chaque partie (ou demie-boîte de vitesses) PBj comprend un arbre primaire et un ou plusieurs arbres secondaires, avec des synchroniseurs placés soit sur l'arbre primaire, soit sur un arbre secondaire.

Chaque actionneur ACj est agencé de manière à agir sur une fourchette de commutation (non illustrée) qui est elle-même propre à agir sur un synchroniseur Sj. Par ailleurs, chaque actionneur ACj est associé à un capteur de déplacement et un capteur d'effort (non illustrés). Un capteur d'effort est destiné à mesurer l'effort que son actionneur ACj exerce sur le synchroniseur Sj associé. Un capteur de position est chargé de déterminer à chaque instant la position en cours pm de son actionneur ACj par rapport à une position de référence. Cela permet de piloter les différents synchroniseurs Sj en position, en effort, ou en vitesse, selon la phase de fonctionnement dans laquelle ils sont impliqués.

Le véhicule stocke une table de correspondance qui établit une correspondance entre des positions pc de chaque actionneur ACj d'une partie PBj de la boîte de vitesses BV et des couples moteur cc qui sont transmis à l'autre partie PBj' de cette boîte de vitesses BV (lorsque son embrayage EMj' est en position fermée (d'embrayage)). Cette table de correspondance comprend donc les différentes positions prises par chaque actionneur ACj en présence de différents couples moteur cc, et cela pour la phase de synchronisation et la phase de crabotage.

Les embrayages EM1 et EM2 sont contrôlés par des actionneurs d'embrayage AE1 et EA2.

Comme indiqué précédemment, l'invention propose de mettre en œuvre un procédé destiné à permettre la détermination de nouvelles positions pc' prises par les actionneurs ACj de la boîte de vitesses BV pendant des phases de synchronisation et de crabotage d'une présélection de rapport.

Ce procédé peut être mis en œuvre au moyen du dispositif de détermination DD selon l'invention, qui comprend au moins des moyens de traitement (ou de calcul) MT.

Dans l'exemple non limitatif illustré sur la figure 1, le dispositif de détermination DD fait partie d'un calculateur CA qui est notamment couplé aux actionneurs ACj et aux différents capteurs (notamment d'effort, de position et de vitesse) de la boîte de vitesses BV, ainsi qu'aux actionneurs d'embrayage AEj. Mais cela n'est pas obligatoire. En effet, ce dispositif de détermination DD pourrait être un équipement couplé à ce calculateur CA, directement ou indirectement, ou bien pourrait comprendre son propre calculateur couplé au calculateur CA, directement ou indirectement. Par conséquent, le dispositif de détermination DD peut être réalisé sous la forme de modules logiciels (ou informatiques ou encore « software »), ou bien d'une combinaison de circuits électroniques (ou « hardware ») et de modules logiciels.

On notera que la table de correspondance précitée peut être stockée soit dans le calculateur CA, soit dans le dispositif de détermination DD.

Le procédé, selon l'invention, comprend une étape qui est déclenchée par le dispositif de détermination DD en cas de détection d'un problème pb résultant d'un déplacement d'un actionneur ACj d'une partie PBj de la boîte de vitesses BV. Ce problème pb peut être un dysfonctionnement induisant un bruit ou craquement ou un blocage empêchant l'engagement du rapport associé à l'actionneur ACj lors de sa présélection ou encore un désengagement intempestif du rapport engagé (saut de rapport).

On notera qu'afin de ne pas tenir compte d'un problème qui ne survient qu'une seule fois, il est avantageux de considérer qu'il existe effectivement un problème pb sur un actionneur ACj lorsque ce problème survient de façon répétée sur ce dernier (ACj) pour une même valeur ctk de couple moteur transmis à la partie PBj' (j' ≠ j) de la boîte de vitesses BV qui n'est pas celle (PBj) à laquelle il appartient. En d'autres termes, il est préférable d'effectuer l'étape du procédé en cas de détection du même problème pb un nombre de fois égal à une valeur prédéfinie N1. Par exemple, cette valeur prédéfinie N1 peut être égale à trois ou quatre.

Dans l'étape du procédé, une fois qu'un problème pb, résultant d'un déplacement d'un actionneur ACj d'une partie PBj de la boîte de vitesses BV, a été effectivement détecté, on (les moyens de traitement MT) détermine(nt) dans la table de correspondance la position connue pc de cet actionneur ACj qui est associée à un couple moteur connu cc qui correspond au couple moteur ctk qui a été transmis à l'autre partie PBj' lors du problème détecté.

Puis, l'étape du procédé se poursuit par la détermination (par les moyens de traitement MT) d'un écart ε entre cette position connue déterminée pc et une position pm de cet actionneur ACj qui a été mesurée lors du problème détecté (soit ε = pc - pm).

On notera qu'il est préférable que dans l'étape du procédé on ne détermine l'écart ε que lorsque la différence entre le couple moteur connu cc, associé dans la table à la position connue déterminée pc, et le couple moteur ctk, qui a été transmis à l'autre partie PBj' lors du problème pb détecté, est inférieure à un premier seuil s1 prédéfini. Cela permet d'éviter d'effectuer un remplacement d'une position connue pc correspondant à un couple moteur cc par une position non significative du fait qu'elle correspond à un couple moteur transmis trop différent de ce couple moteur cc.

Par exemple, ce premier seuil s1 peut être compris entre 10 N.m et 20 N.m.

Par exemple, si s1 = 10 N.m, si les valeurs de couple moteur cc de la table de correspondance associées à AC1 sont 20 N.m, 50 N.m, 100 N.m, 150 N.m et 200 N.m, et si un échec d'engagement d'un rapport associé est constaté à 70 N.m, on ne corrigera pas la table de correspondance. Mais si l'échec d'engagement intervient à 52 N.m, on remplace dans la table de correspondance la position de l'actionneur AC1, associée au couple cc égal à 50 N.m, par la nouvelle position pc' de l'actionneur AC1, mesurée pour le couple moteur transmis ctk égal à 52 N.m.

Enfin, l'étape du procédé se termine par le remplacement dans la table de correspondance (par les moyens de traitement MT) de la position connue déterminée pc par une nouvelle position pc' qui est fonction de l'écart déterminé ε.

Par exemple, cette nouvelle position pc' peut être égale à la somme de la position connue déterminée pc et de l'écart déterminé ε.

On notera qu'il est préférable de ne pas effectuer le remplacement dans la table de correspondance de pc par pc' en une seule fois. Il est en effet préférable que les moyens de traitement MT effectuent progressivement ce remplacement en N2 fois, avec N2 ≥ 2. Dans ce cas, la première fois induit un premier remplacement et est consécutive à la détermination de la nouvelle position pc', et chaque fois suivante induit un autre remplacement et est consécutive à un nouveau déplacement de l'actionneur ACj, similaire au précédent déplacement, en présence d'un couple moteur ctk transmis à l'autre partie PBj' et correspondant au couple moteur connu cc associé à la position connue déterminée pc. Le mot « similaire » signifie ici que le nouveau déplacement se fait pour une situation sensiblement identique à celle présente lors du déplacement précédent.

On comprendra que lors de chacun de ces N2 remplacements la position qui remplace la précédente position est égale à cette dernière augmentée (ou diminuée) d'une partie prédéfinie de l'écart déterminé ε, la somme de ces parties prédéfinies étant par exemple égale à l'écart déterminé ε.

Par exemple, N2 peut être égale à trois (3) ou quatre (4).

On notera également que dans l'étape du procédé, on (les moyens de traitement MT) peu(ven)t éventuellement déterminer N2 en fonction de l'écart déterminé ε.

On notera également que dans l'étape du procédé, on (les moyens de traitement MT) peu(ven)t effectuer le remplacement de pc par pc' lorsque l'écart ε est supérieur à un second seuil s2 prédéfini. Cela permet d'éviter d'effectuer trop fréquemment des remplacements de position faisant l'objet d'une trop faible variation.

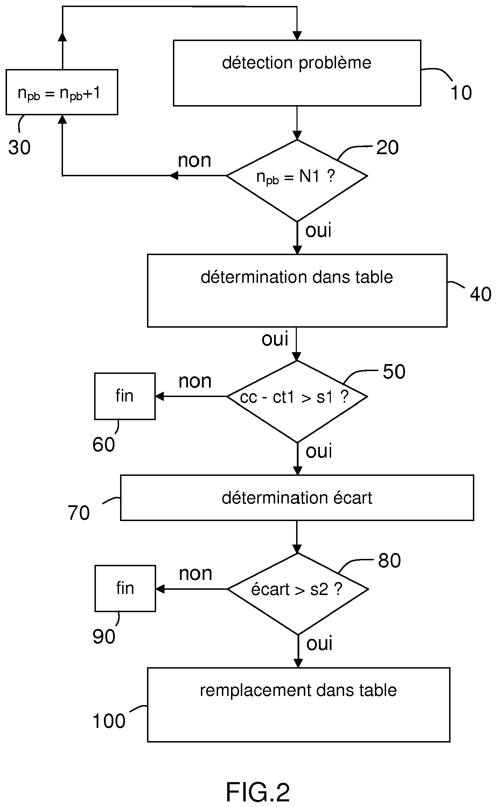

On a schématiquement illustré sur la figure 2 un exemple d'algorithme mettant en œuvre un procédé de détermination selon l'invention pour une boîte de vitesses DCT du type de celle décrite ci-avant en référence à la figure 1.

L'algorithme commence par une sous-étape 10 dans laquelle on (par exemple les moyens de traitement MT) détecte(nt) un problème pb résultant d'un déplacement de l'actionneur AC1 de la première partie PB1 de la boîte de vitesses BV en présence d'un couple moteur ct1 transmis à la seconde partie PB2 de la boîte de vitesses BV.

Dans une sous-étape 20 on (les moyens de traitement MT) détermine(nt) si une variable n_{pb}, qui représente le nombre de fois que ce problème pb est survenu sur l'actionneur AC1 en présence de ce couple moteur ct1, est égal la valeur prédéfinie N1. Si n_{pb} est inférieur à N1, les moyens de traitement MT ne font qu'incrémenter d'une unité la valeur en cours de la variable n_{pb} dans une sous-étape 30, puis ils retournent à la sous-étape 10.

Lorsque n_{pb} devient égal à N1, cela signifie que le problème pb est récurrent et donc qu'une nouvelle position doit être déterminée pour l'actionneur AC1 en présence du couple moteur ct1. Dans ce cas, on (les moyens de traitement MT) détermine(nt) dans une sous-étape 40, dans la table de correspondance, la position connue pc de l'actionneur AC1 qui est associée à un couple moteur connu cc qui correspond au couple moteur ct1.

Puis, dans une sous-étape 50, on (les moyens de traitement MT) effectue(nt) un test pour déterminer si la différence entre le couple moteur connu cc (associé à la position connue déterminée pc) et le couple moteur ct1 est inférieure à un premier seuil s1 prédéfini.

Dans la négative (non - (cc - ct1) < s1), on (les moyens de traitement MT) met(tent) fin à l'algorithme (ou étape) dans une sous-étape 60.

Dans l'affirmative (oui - (cc - ct1) > s1), on (les moyens de traitement MT) détermine(nt) dans une sous-étape 70 un écart ε entre la position connue déterminée pc et la position pm de l'actionneur AC1 qui a été mesurée lors du problème détecté (soit ε = pc - pm).

Puis, dans une sous-étape 80, on (les moyens de traitement MT) effectue(nt) un test pour déterminer si l'écart ε est supérieur au second seuil s2.

Dans la négative (non - ε < s2), on (les moyens de traitement MT) met(tent) fin à l'algorithme (ou étape) dans une sous-étape 90.

Dans l'affirmative (oui - ε > s2), on (les moyens de traitement MT) remplace(nt) dans une sous-étape 100, dans la table de correspondance, la position connue déterminée pc par une nouvelle position pc' qui est fonction de l'écart déterminé ε.

De préférence, ce remplacement est effectué progressivement en N2 fois, avec N2 ≥ 2.

## Revendications

1. Procédé de détermination de nouvelles positions d'actionneurs (ACj) dans une boîte de vitesses (BV) à double embrayage (EMj) d'un véhicule produisant un couple moteur variable, ladite boîte de vitesses (BV) comprenant deux parties (PBj) comportant chacune au moins un actionneur (ACj) propre à agir sur un synchroniseur (Sj) associé lorsqu'il est placé, lors de phases de synchronisation et de crabotage d'un pignon fou (PF), dans des positions connues stockées dans une table en correspondance de couples moteur connus et transmis à l'autre partie (PBj'), **caractérisé en ce qu'**il comprend une étape (10-100) dans laquelle, en cas de détection d'un problème résultant d'un déplacement d'un actionneur (ACj) d'une partie (PBj), on détermine dans ladite table la position connue de cet actionneur (ACj) qui est associée à un couple moteur connu qui correspond au couple moteur transmis à l'autre partie (PBj') lors dudit problème détecté, puis on détermine un écart entre ladite position connue déterminée et une position dudit actionneur (ACj) mesurée lors dudit problème détecté, et on remplace dans ladite table ladite position connue déterminée par une nouvelle position fonction dudit écart déterminé.

2. Procédé selon la revendication 1, **caractérisé en ce que** dans ladite étape ladite nouvelle position est égale à la somme de ladite position connue déterminée et dudit écart déterminé.

3. Procédé selon l'une des revendications 1 et 2, **caractérisé en ce que** dans ladite étape on remplace progressivement dans ladite table ladite position connue déterminée par ladite nouvelle position en N2 fois, avec N2 ≥ 2, une première fois étant consécutive à ladite détermination de la nouvelle position et chaque fois suivante étant consécutive à un nouveau déplacement dudit actionneur (ACj), similaire au précédent déplacement, en présence d'un couple moteur transmis à ladite autre partie (PBj') et correspondant audit couple moteur connu associé à ladite position connue déterminée.

4. Procédé selon la revendication 3, **caractérisé en ce que** dans ladite étape on détermine N2 en fonction dudit écart déterminé.

5. Procédé selon l'une des revendications 1 à 4, **caractérisé en ce que** dans ladite étape on détermine ledit écart lorsqu'une différence entre ledit couple moteur connu, associé à ladite position connue déterminée, et ledit couple moteur, transmis à l'autre partie (PBj') lors dudit problème détecté, est inférieure à un premier seuil prédéfini.

6. Procédé selon l'une des revendications 1 à 5, **caractérisé en ce que** dans ladite étape on effectue ledit remplacement lorsque ledit écart est supérieur à un second seuil prédéfini.

7. Procédé selon l'une des revendications 1 à 6, **caractérisé en ce que** l'on effectue ladite étape en cas de détection dudit problème un nombre de fois égal à une valeur prédéfinie.

8. Dispositif (DD) de détermination de nouvelles positions d'actionneurs (ACj) dans une boîte de vitesses (BV) à double embrayage (EMj) d'un véhicule produisant un couple moteur variable, ladite boîte de vitesses (BV) comprenant deux parties (PBj) comportant chacune au moins un actionneur (ACj) propre à agir sur un synchroniseur (Sj) associé lorsqu'il est placé, lors de phases de synchronisation et de crabotage d'un pignon fou (PF), dans des positions connues stockées dans une table en correspondance de couples moteur connus et transmis à l'autre partie (PBj'), **caractérisé en ce qu'**il comprend des moyens de traitement (MT) propres, en cas de détection d'un problème résultant d'un déplacement d'un actionneur (ACj) d'une partie (PBj), à déterminer dans ladite table la position connue de cet actionneur (ACj) qui est associée à un couple moteur connu qui correspond au couple moteur transmis à l'autre partie (PBj') lors dudit problème détecté, puis à déterminer un écart entre ladite position connue déterminée et une position dudit actionneur (ACj) mesurée lors dudit problème détecté, et à remplacer dans ladite table ladite position connue déterminée par une nouvelle position fonction dudit écart déterminé.

9. Calculateur (CA), **caractérisé en ce qu'**il comprend un dispositif de détermination (DD) selon la revendication 8.

10. Véhicule comprenant une boîte de vitesses (BV) à double embrayage (EMj), **caractérisé en ce qu'**il comprend en outre un dispositif de détermination (DD) selon la revendication 8 ou un calculateur (CA) selon la revendication 9.

## Patentansprüche

1. Verfahren zum Bestimmen neuer Positionen von Aktuatoren (ACj) in einem Getriebe (BV) mit Doppelkupplung (EMj) eines Fahrzeugs, das ein variables Motordrehmoment erzeugt, wobei das Getriebe (BV) zwei Teile (PBj) umfasst, umfassend Jeder mindestens ein Aktuator (ACj) kann auf einen zugeordneten Synchronisierer (Sj) einwirken, wenn er während der Synchronisations- und Kupplungsphasen eines Leerlaufgetriebes (PF) in bekannten Positionen in einer Tabelle in gespeichert ist Entsprechung bekannter Motordrehmomente, die auf den anderen Teil (PBj') übertragen werden, **dadurch gekennzeichnet, dass** er einen Schritt (10-100) umfasst, in dem im Falle der Erkennung eines Problems, das aus einer Verschiebung von a resultiert, Aktuator (ACj) eines Teils (PBj) bestimmt man in dieser Tabelle die bekannte Position dieses Aktuators (ACj), die einem bekannten Motordrehmoment zugeordnet ist, das dem Motordrehmoment entspricht, das während des anderen Teils (PBj') übertragen wird von dem erkannten Problem wird dann eine Differenz zwischen der bestimmten bekannten Position bestimmt geboren und eine Position des Aktuators (ACj), die während des erkannten Problems gemessen wurde, und die bestimmte bekannte Position wird in der Tabelle durch eine neue Position in Abhängigkeit von der bestimmten Abweichung ersetzt.

2. Verfahren nach Anspruch 1, **gekennzeichnet dadurch, dass** in dem Schritt die neue Position gleich der Summe der bestimmten bekannten Position und der bestimmten Abweichung ist.

3. Verfahren nach einem der Ansprüche 1 und 2, das **dadurch gekennzeichnet ist, dass** in dem Schritt allmählich die bekannte Position, die durch die neue Position in N2-mal bestimmt wird, in der Tabelle ersetzt wird, wobei N2 ≥ 2 ist, wobei ein erstes Mal nacheinander erfolgt. Bestimmung der neuen Position und jedes nachfolgende Mal, das einer neuen Verschiebung des Aktuators (ACj) folgt, ähnlich der vorherigen Verschiebung, in Gegenwart eines Motordrehmoments, das auf den anderen Teil (PBj') übertragen wird und dem bekannten Motordrehmoment entspricht, das damit verbunden ist sagte bestimmte bekannte Position.

4. Verfahren nach Anspruch 3, das **dadurch gekennzeichnet ist, dass** in dem Schritt N2 als Funktion der ermittelten Abweichung bestimmt wird.

5. Verfahren nach einem der Ansprüche 1 bis 4, das **dadurch gekennzeichnet ist, dass** in dem Schritt die Differenz bestimmt wird, wenn eine Differenz zwischen dem bekannten Motordrehmoment, das der bestimmten bekannten Position zugeordnet ist, und dem Motordrehmoment, das auf den anderen Teil übertragen wird (PBj ') während des erkannten Problems ist kleiner als ein erster vordefinierter Schwellenwert.

6. Verfahren nach einem der Ansprüche 1 bis 5, das **dadurch gekennzeichnet ist, dass** in dem Schritt das Ersetzen durchgeführt wird, wenn die Differenz größer als ein zweiter vordefinierter Schwellenwert ist.

7. Verfahren nach einem der Ansprüche 1 bis 6, das **dadurch gekennzeichnet ist, dass** der Schritt im Falle der Erkennung des Problems mehrmals ausgeführt wird, was einem vordefinierten Wert entspricht.

8. Vorrichtung (DD) zum Bestimmen neuer Positionen von Aktuatoren (ACj) in einem Getriebe (BV) mit Doppelkupplung (EMj) eines Fahrzeugs, das ein variables Motordrehmoment erzeugt, wobei das Getriebe (BV) zwei Teile umfasst (PBj), die jeweils mindestens einen Aktuator 5 (ACj) umfassen, der in der Lage ist, auf einen zugeordneten Synchronisierer (Sj) zu wirken, wenn dieser während der Synchronisations- und Kupplungsphasen eines Leerlaufgetriebes (PF) in bekannten gespeicherten Positionen angeordnet ist in einer Entsprechungstabelle bekannter Motordrehmomente, die auf den anderen Teil (PBj') übertragen werden und **dadurch gekennzeichnet sind, dass** sie eigene Verarbeitungsmittel (MT) umfassen, falls ein Problem erkannt wird, das sich aus a ergibt Verschiebung eines Aktuators (ACj) eines Teils (PBj), wobei in dieser Tabelle die bekannte Position dieses Aktuators (ACj) zu bestimmen ist, die einem bekannten Motordrehmoment zugeordnet ist, das dem auf das andere Teil (PBj') während des Problems erkannt, dann bei der Bestimmung eines Unterschieds zwischen den Positionen eine bekannte bestimmte und eine Position des Aktuators (ACj), die während des erfassten Problems gemessen wurde, und in der Tabelle die bestimmte bekannte Position durch eine neue Position ersetzt, die von der bestimmten Abweichung abhängt.

9. Rechner (CA), **dadurch gekennzeichnet, dass** er eine Bestimmungsvorrichtung (DD) nach Anspruch 8 umfasst. )

10. Fahrzeug mit einem Getriebe (BV) mit Doppelkupplung (EMj), **dadurch gekennzeichnet, dass** es ferner eine Bestimmungsvorrichtung (DD) nach Anspruch 8 oder einen Computer (CA) nach Anspruch 9 umfasst.

## Claims

1. Method for determining new positions of actuators (ACj) in a gearbox (BV) with double clutch (EMj) of a vehicle producing a variable engine torque, said gearbox (BV) comprising two parts (PBj) comprising each at least one actuator (ACj) able to act on an associated synchronizer (Sj) when it is placed, during synchronization and clutching phases of an idle gear (PF), in known positions stored in a table in correspondence of known engine torques transmitted to the other part (PBj'), **characterized in that** it comprises a step (10-100) in which, in the event of detection of a problem resulting from a displacement of a actuator (ACj) of a part (PBj), one determines in said table the known position of this actuator (ACj) which is associated with a known motor torque which corresponds to the motor torque transmitted to the other part (PBj') during of said detected problem, then a difference between said determined known position is determined born and a position of said actuator (ACj) measured during said detected problem, and said determined known position is replaced in said table by a new position depending on said determined deviation.

2. Method according to Claim 1, **characterized in that** in said step, said new position is equal to the sum of said determined known position and said determined deviation.

3. Method according to one of claims 1 and 2, **characterized in that** in said step is gradually replaced in said table said known position determined by said new position in N2 times, with N2 ≥ 2, a first time being consecutive to said. determination of the new position and each subsequent time being consecutive to a new displacement of said actuator (ACj), similar to the previous displacement, in the presence of a motor torque transmitted to said other part (PBj') and corresponding to said known motor torque associated with said determined known position.

4. Method according to Claim 3, **characterized in that** in said step N2 is determined as a function of said determined deviation.

5. Method according to one of claims 1 to 4, **characterized in that** in said step said difference is determined when a difference between said known engine torque, associated with said determined known position, and said engine torque, transmitted to the other part (PBj ') during said problem detected, is less than a first predefined threshold.

6. Method according to one of claims 1 to 5, **characterized in that** in said step said replacement is carried out when said difference is greater than a second predefined threshold.

7. Method according to one of claims 1 to 6, **characterized in that** said step is carried out in the event of detection of said problem a number of times equal to a predefined value.

8. Device (DD) for determining new positions of actuators (ACj) in a gearbox (BV) with double clutch (EMj) of a vehicle producing a variable engine torque, said gearbox (BV) comprising two parts (PBj) each comprising at least one actuator 5 (ACj) capable of acting on an associated synchronizer (Sj) when it is placed, during synchronization and clutching phases of an idle gear (PF), in known stored positions in a correspondence table of known engine torques and transmitted to the other part (PBj'), **characterized in that** it comprises own processing means (MT), in the event of detection of a problem resulting from a displacement of an actuator (ACj) of a part (PBj), to be determined in said table the known position of this actuator (ACj) which is associated with a known motor torque which corresponds to the motor torque transmitted to the other part (PBj') during said problem detected, then in determining a difference between said position known determined and a position of said actuator (ACj) measured during said detected problem, and in said table replaced said determined known position by a new position dependent on said determined deviation.

9. Calculator (CA), **characterized in that** it comprises a determination device (DD) according to claim 8. )

10. Vehicle comprising a gearbox (BV) with double clutch (EMj), **characterized in that** it further comprises a determination device (DD) according to Claim 8 or a computer (CA) according to Claim 9.
